# FASCICULE DE BREVET EUROPEEN

(11) **EP 0 974 821 B1**
(45) Date de publication et mention de la délivrance du brevet: **03.03.2004**
(21) Numéro de dépôt: 99401710.1
(22) Date de dépôt: 08.07.1999
(51) Int. Cl.: G01L 3/10, G01L 3/14

(54) **Dispositif de mesure de couple entre deux arbres coaxiaux avec une bague**
Gerät zur Messung des Drehmomentes zwischen zwei koaxialen Wellen mit einem Ring
Device for measuring torque between two coaxial shafts with a ring

(30) Priorité: 23.07.1998 FR 9809397
(43) Date de publication de la demande: 26.01.2000
(73) Titulaire: Hispano-Suiza, 75015 Paris (FR)
(72) Inventeur: Girard, Françis, 78220 Viroflay (FR); Linet, Hugues Henri Raymond, 92400 Courbevoie (FR)

(56) Documents cités:
- EP-A- 0 652 424
- DE-C- 19 650 477

## Description

L'invention est relative à un dispositif de mesure de couple entre deux arbres coaxiaux.

Les dispositifs de mesure d'effort entre deux solides comprennent classiquement un élément élastique peu rigide qui les relie, et qui se déforme donc fortement quand un effort apparaît : il suffit de mesurer ces déformations après avoir réalisé un étalonnage pour en déduire l'effort appliqué. On peut procéder de diverses façons, mais une des plus courantes consiste à coller des jauges de contrainte sur l'élément de liaison et à mesurer la variation de résistance des éléments conducteurs qui y sont noyés, et qui varie en fonction des déformations.

Des modes de construction très différents sont possibles pour ces dispositifs. Celui qui est proposé ici s'applique à la mesure d'un couple de torsion entre deux arbres coaxiaux et présente les avantages d'être simple, robuste et compact tout en étant sensible et précis, et d'offrir une réponse transitoire très brève qui lui permet d'enregistrer presque instantanément toute variation de couple.

Le dispositif comprend sous sa forme la plus générale conformément à la revendication 1 une bague rigidement liée au premier arbre, une clavette axiale sur le second arbre, la bague étant divisée par une fente axiale bordée d'appendices, les appendices comprenant une portion d'extrémité ayant une surface d'appui sur la clavette et une portion mince, reliant la portion d'extrémité à une portion principale de la bague, porteuse d'une jauge de contrainte sur une face d'épaisseur de la bague, la portion mince ayant une extension purement ou obliquement axiale, les appendices étant séparés du premier arbre.

L'invention sera maintenant décrite dans une réalisation préférée au moyen des figures suivantes, qui permettront de mieux comprendre ses caractéristiques, buts et avantages.
- La figure 1 est une vue générale en éclaté du dispositif,
- les figures 2A et 2B illustrent deux variantes de réalisation d'un palier de bague,
- et la figure 3 est un agrandissement de la partie de mesure de la bague.

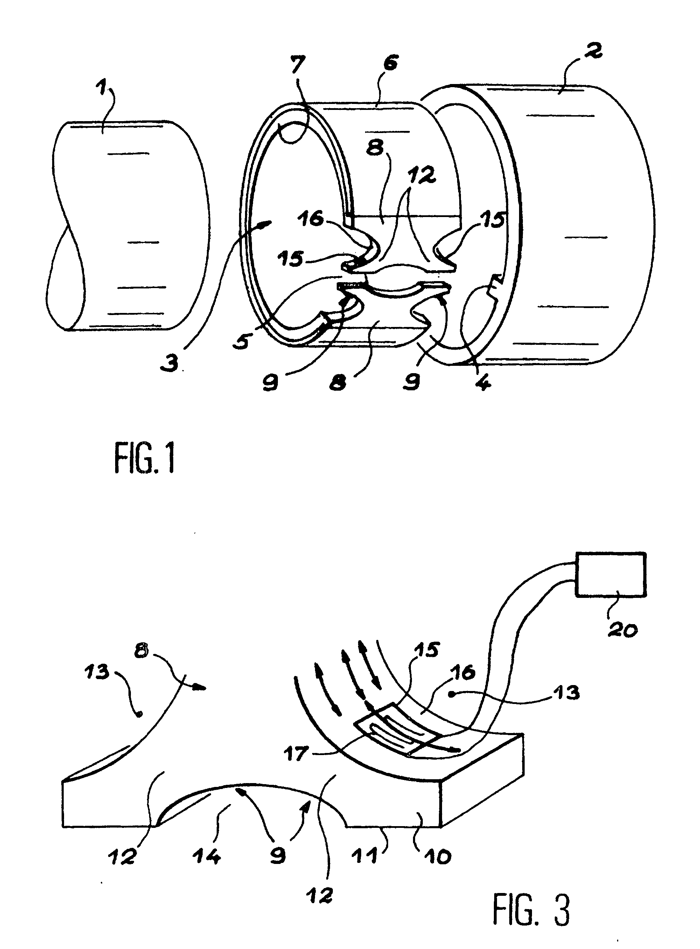

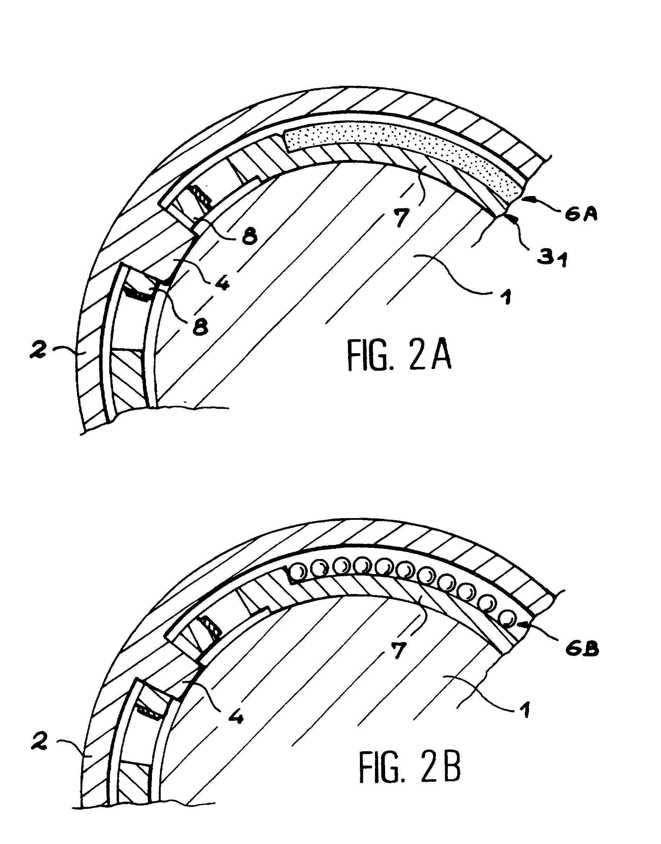

Les principaux éléments de l'invention sont représentés sous forme éclatée à la figure 1 : un premier arbre 1 est engagé dans un second arbre 2 ; le premier arbre 1 porte une bague 3 qui l'entoure, et le second arbre 2 une clavette 4 de direction axiale qui se loge dans une fente 5 de même direction de la bague 3 ; la bague 3, rigidement liée au premier arbre 1 par un frettage, un collage, des vis ou tout autre moyen, relie donc angulairement les arbres 1 et 2 avec la clavette 4 ; un palier 6, pouvant consister en un roulement à aiguilles ou une bague de Téflon, entoure une portion principale 7 de la bague 3 et lui permet d'être soutenue par le second arbre 2 sans frottement notable. Ces deux variantes de réalisation sont illustrées aux figures 2A et 2B, qui montrent encore l'allure de la bague 3 près de la clavette 4 : sa portion principale 7, engagée sur le premier arbre 1, s'interrompt près de la clavette 4, où la bague 3 est composée de portions de mesure 8 séparées du premier arbre 1 et qui encadrent la clavette 4 en l'enserrant avec une légère précontrainte qui élimine toute oscillation entre les arbres 1 et 2 et les erreurs subséquentes de mesure. Les portions de mesure 8 sont mieux représentées à la figure 3 et comprennent chacune une paire d'appendices 9 dont chacun est lui-même composé d'une portion d'extrémité 10, relativement massive et reposant sur la clavette 4 par une surface d'appui 11, et une portion de liaison 12 amincie qui relie la portion d'extrémité 10 au reste de la bague 3. Une telle forme peut être obtenue facilement par usinage, en attaquant les portions de mesure 8 par une fraise sur ses trois faces libres pour y creuser deux encoches latérales 13 et une encoche frontale 14 qui délimitent et séparent les appendices 9. Il est clair que l'épaisseur et donc la rigidité des portions de liaison 12 dépendent de la profondeur d'usinage choisie, qui est elle-même réglée en fonction de la sensibilité du dispositif qu'on veut obtenir.

C'est que les portions de liaison 12 portent chacune une jauge de contrainte 15 sur une face extérieure 16, correspondant à une face d'épaisseur de la bague 3. Les couples entre les arbres 1 et 2 s'exercent sur la bague 3 sous forme de forces pesant sur les faces d'appui 11 des appendices 9, et qui sont transmises sous forme d'efforts de flexion aux portions de liaison 12 et aux jauges de contrainte 15.

On sait que les jauges de contrainte 15 comprennent une couche de substrat collée sur la surface d'épreuve et dans laquelle un fil conducteur est noyé ; les déformations d'allongement ou de contraction que le fil subit se traduisent par une variation de sa résistance, qui peut être mesurée par un pont de Wheatstone. Les fils 17 des jauges de contrainte 15 sont donc orientés dans la direction principale de déformation, c'est-à-dire la direction d'extension des appendices 9. Leurs extrémités sont ailleurs reliées au dispositif de mesure 20 par des fils électriques. Comme il s'agit d'une technique très connue, ces éléments n'ont pas été représentés en détail. Si les arbres 1 et 2 sont sensiblement fixes, les fils électriques relient directement les jauges de contrainte 15 à un dispositif de mesure extérieur et fixe ; s'ils tournent, l'ensemble du circuit comprend une partie fixe et une partie accompagnant les arbres, qui sont reliées entre elles par des moyens de télémétrie ou par des contacts circulaires sur lesquels frottent des balais.

Dans la réalisation préférée, chaque portion de mesure 8 comprend une paire d'appendices 9 pointant axialement dans des sens opposés, les portions de liaison 12 ayant une extension oblique, assez importante en direction axiale. Chacun des appendices 9 fait face à un appendice 9 de même nature de la portion de mesure 8 opposée : la clavette 4 est ainsi enserrée dans la bague 3 sur une plus grande longueur.

## Revendications

1. Dispositif de mesure de couple entre un premier arbre (1) et un second arbre (2) coaxiaux, comprenant une bague (3) rigidement liée au premier arbre (1), une clavette (4) axiale sur le second arbre, la bague (3) étant divisée par une fente (5) axiale bordée d'appendices (9), les appendices comprenant une portion d'extrémité (10) ayant une surface d'appui (11) sur la clavette (4) et une portion mince (12), reliant la portion d'extrémité (10) à une portion principale (7) de la bague (3), porteuse d'une jauge de contrainte (15) sur une face d'épaisseur (16) de la bague (3), la portion mince (12) ayant une extension purement ou obliquement axiale, les appendices (9) étant séparés du premier arbre (1).

2. Dispositif de mesure de couple selon la revendication 1, dans lequel la bague comprend deux paires d'appendices (9), les appendices de chaque paire pointant dans des sens axiaux opposés de la clavette (4).

3. Dispositif de mesure de couple selon l'une quelconque des revendications 1 ou 2, dans lequel les appendices (9) sont face à face par paires de part et d'autre de la clavette (4).

4. Dispositif de mesure de couple selon l'une quelconque des revendications 1 à 3, dans lequel il comprend un palier (6) entre la bague (3) et le second arbre (2).

## Patentansprüche

1. Vorrichtung zur Messung des Drehmoments zwischen einer ersten Welle (1) und einer zweiten, koaxialen Welle (2), die einen mit der ersten Welle (1) starr verbundenen Ring (3) und einen auf der zweiten Welle sitzenden, axial verlaufenden Keil (4) umfasst, wobei der Ring (3) durch einen axial verlaufenden Spalt (5) unterbrochen ist, an dessen Rändern Ansatzstücke (9) ausgeführt sind, wobei die Ansatzstücke einen Endabschnitt (10) mit einer Anlagefläche (11), die an dem Keil (4) anliegt, und einen schlanken Abschnitt (12), der den Endabschnitt (10) mit einem Hauptabschnitt (7) des Rings (3) verbindet und an einer Fläche der Dicke (16) des Rings (3) einen Dehnungsmessstreifen (15) trägt, aufweisen, wobei der schlanke Abschnitt (12) eine rein oder schräg axiale Ausdehnung aufweist, wobei die Ansatzstücke (9) von der ersten Welle (1) getrennt sind.

2. Vorrichtung zur Drehmoment-Messung nach Anspruch 1, bei der der Ring zwei Paare von Ansatzstücken (9) aufweist, wobei die Ansatzstücke jedes Paars axial in entgegengesetzte Richtungen zu dem Keil (4) weisen.

3. Vorrichtung zur Drehmoment-Messung nach einem der Ansprüche 1 oder 2, bei der die Ansatzstücke (9) sich paarweise beiderseits des Keils (4) gegenüber liegen.

4. Vorrichtung zur Drehmoment-Messung nach einem der Ansprüche 1 bis 3, bei der sich zwischen dem Ring (3) und der zweiten Welle (2) ein Lager (6) befindet.

## Claims

1. Device for measuring torque between a first shaft (1) and a second shaft (2) which are coaxial, comprising a ring (3) rigidly connected to the first shaft (1), an axial key (4) on the second shaft, the ring (3) being split by an axial slot (5) boarded by appendages (9), the appendages comprising an end portion (10) having a bearing surface (11) for bearing on the key (4) and a thin portion (12) connecting the end portion (10) to a main portion (7) of the ring (3), bearing a strain gauge (15) on one thickness face (16) of the ring (3), the thin portion (12) having a purely or obliquely axial extension, the appendages (9) being separated from the first shaft (1).

2. Torque-measuring device according to Claim 1, in which the ring comprises two pairs of appendages (9), the appendages of each pair pointing in opposite axial directions of the key (4).

3. Torque-measuring device according to either one of Claims 1 and 2, in which the appendages (9) are face to face in pairs on each side of the key (4).

4. Torque-measuring device according to either one of Claims 1 and 3, in which it comprises a bearing (6) between the ring (3) and the second shaft (2).
